# EUROPÄISCHE PATENTANMELDUNG

(11) **EP 4 485 784 A1**
(43) Veröffentlichungstag der Anmeldung: **01.01.2025**
(21) Anmeldenummer: 23181667.9
(22) Anmeldetag: 27.06.2023
(51) Int. Cl.: H02M 7/162, H02M 1/00, H02M 7/08, C25B 9/65, H02M 1/14, H02M 1/12

(54) **ELEKTROLYSEVORRICHTUNG**

(71) Anmelder: Siemens Aktiengesellschaft, 80333 München (DE)
(72) Erfinder: Lobmeyer, Stefan, 94072 Irching (DE); Schwimmbeck, Franz, 94099 Ruhstorf (DE)
(74) Vertreter: Siemens Patent Attorneys

(57) **Zusammenfassung**

Die Erfindung betrifft eine Elektrolysevorrichtung (1) mit einem Stromrichter (2), einem Elektrolyseur (3) und Netzanschlüssen (4). Zur Verbesserung der Elektrolyseeigenschaften wird vorgeschlagen, dass die Elektrolysevorrichtung (1) mindestens zwei Stromrichter (2) umfasst, wobei die Stromrichter (2) gleichspannungsseitig in einer Parallelschaltung angeordnet sind, wobei der Elektrolyseur (3) mit der Gleichspannungsseite des Stromrichters (2) elektrisch verbunden ist, wobei jede Phase (21) der Stromrichter (2) über eine Drossel (5) mit einem der Netzanschlüsse (4) elektrisch verbunden ist, wobei die Elektrolysevorrichtung (1) eine Steuervorrichtung (6) aufweist, die eingerichtet ist, die Stromrichter (2) versetzt zu takten. Ferner betrifft die Erfindung ein Verfahren zum Betreiben einer derartigen Elektrolysevorrichtung (1), wobei die Stromrichter (2) versetzt getaktet werden.

## Beschreibung

Die Erfindung betrifft eine Elektrolysevorrichtung mit einem Stromrichter, einem Elektrolyseur und Netzanschlüssen. Ferner betrifft die Erfindung ein Verfahren zum Betreiben einer derartigen Elektrolysevorrichtung.

Mit Hilfe eines Elektrolyseurs lässt sich eine Stoffumwandlung als chemische Reaktion herbeiführen. Dabei findet eine Elektrolyse statt. Der Elektrolyseur wird dazu aus einer Energiequelle oder einem Energieversorgungsnetz mit elektrischer Energie versorgt. Eine Wechselspannung der Energiequelle oder des Energieversorgungsnetzes wird dabei mittels eines Stromrichters in eine Gleichspannung für den Elektrolyseur umgewandelt. Daher wird dieser Stromrichter auch als Gleichrichter bezeichnet. Als Stromrichter kommen dazu netzgeführte Stromrichter wie Diodengleichrichter oder Thyristorstromrichter, auch als thyristorgesteuerte Stromrichter bezeichnet, zum Einsatz. Darüber hinaus auch selbstgeführte Stromrichter, beispielsweise auf der Basis von IGBT Halbleitern, bekannt. Diese selbstgeführten Stromrichter werden aufgrund ihres gepulsten Betriebs auch als Pulsstromrichter bezeichnet.

Drosseln können als Gleichtaktdrossel, auch als Common Mode Drossel bezeichnet, ausgeführt sein. Dabei weist die Drossel mehrere Wicklungen auf, die magnetisch gekoppelt sind. Die magnetische Kopplung führt dazu, dass Gleichtaktströme unterdrückt werden. Im Gegensatz dazu kann eine Drossel auch als Gegentaktdrossel ausgebildet sein. Dann führt die Kopplung dazu, dass Gegentaktströme unterdrückt werden.

Zukünftig wird die Elektrolyse bei der wirtschaftlichen und umweltfreundlichen Erzeugung von Wasserstoff beispielsweise als synthetischer Kraftstoff an Bedeutung gewinnen. Dabei wird mittels eines Elektrolyseurs bzw. einer entsprechenden Elektrolysevorrichtung Wasserstoff erzeugt. Dieser Kraftstoff auf der Basis von Wasserstoff kann signifikant zur Senkung von klimaschädlichen CO2 Emissionen beitragen.

Aus der Veröffentlichung "Steuerverfahren für selbstgeführte Stromrichter" (Felix Jenni, Dieter Wüest; Zürich: vdf, Hochschulverl. an der ETH Zürich; Stuttgart: Teubner, 1995) ist eine versetzte Taktung von Stromrichtern bekannt.

Der Erfindung liegt die Aufgabe zugrunde, eine Elektrolysevorrichtung zu verbessern.

Diese Aufgabe wird durch eine Elektrolysevorrichtung, aufweisend mindestens zwei Stromrichter, einen Elektrolyseur und Netzanschlüsse gelöst, wobei die Stromrichter gleichspannungsseitig in einer Parallelschaltung angeordnet sind, wobei der Elektrolyseur mit der Gleichspannungsseite des Stromrichters elektrisch verbunden ist, wobei jede Phase der Stromrichter über eine Drossel mit einem der Netzanschlüsse elektrisch verbunden ist, wobei die Elektrolysevorrichtung eine Steuervorrichtung aufweist, die eingerichtet ist, die Stromrichter versetzt zu takten. Ferner wird die Aufgabe durch ein Verfahren zum Betreiben einer derartigen Elektrolysevorrichtung gelöst, wobei die Stromrichter versetzt getaktet werden.

Weitere vorteilhafte Ausgestaltungen der Erfindung sind in den abhängigen Ansprüchen angegeben.

Der Erfindung liegt unter anderem die Erkenntnis zugrunde, dass sich die Wirkungsweise eines Elektrolyseurs deutlich verbessern lässt, wenn die Spannung an der Gleichspannungsseite des Stromrichters, die zur Speisung des Elektrolyseurs dient, idealerweise frei von Oberschwingungen ist. Auch eine Reduzierung von Oberschwingungen führt dabei schon zu einer teilweise deutlichen Steigerung der Effizient der Elektrolyse. Dazu wird die Ausbildung von Oberschwingungen verhindert oder zumindest unterdrückt.

Ein großer Anteil von Oberschwingungen, insbesondere von niederfrequenten Oberschwingungen unterhalb von 1 kHz, kann dadurch beseitigt werden, dass der Stromrichter als selbstgeführter Stromrichter ausgebildet ist. Mit anderen Worten ist der Stromrichter als Pulsstromrichter ausgebildet. Dabei hat es sich für eine gleichmäßige Energieaufnahme aus dem Energieversorgungsnetz und einer einfachen Übertragung der elektrischen Energie als vorteilhaft erwiesen, wenn der Stromrichter dreiphasig ausgebildet ist und damit die Energieübertragung zwischen den Netzanschlüssen und dem Stromrichter dreiphasig ausgebildet ist.

Zur weiteren Reduktion der Oberschwingungen werden für die Umwandlung der Wechselspannung einer Energiequelle oder eines Energieversorgungsnetzes, wobei die Energiequelle auch ein Teil des Energieversorgungsnetzes sein kann, in die Gleichspannung für die Speisung des Elektrolyseurs mindestens zwei Stromrichter in der Elektrolysevorrichtung angeordnet, die gleichspannungsseitig parallel angeordnet sind. Die Netzanschlüsse der Elektrolysevorrichtung dienen zur Verbindung der Elektrolysevorrichtung mit einem Energieversorgungsnetz.

Pulsstromrichter mit Gleichspannungszwischenkreis arbeiten typischerweise mit Kondensatoren im Zwischenkreis als Energiespeicher. Durch die Schaltvorgänge im Stromrichter werden diese Kondensatoren mit einem Wechselstrom belastet. Die dabei entstehenden Verluste bzw. die zulässige Stromtragfähigkeit der Kondensatoren sind ein wesentliches Dimensionierungskriterium.

Die einzelnen Phasen der Stromrichter werden über jeweils eine Drossel mit einem der Netzanschlüsse verbunden. Die Drossel dient zur Entkopplung der beiden Stromrichter. Dabei werden zur Verringerung von gleichspannungsseitigen Strömen und Spannungen die beiden Stromrichter versetzt getaktet. Durch die versetzte Taktung kompensieren sich die Oberschwingungen bei der Taktfrequenz.

Um den Effekt der versetzten Taktung ausnutzen zu können, sind mindestens zwei Stromrichter gleichspannungsseitig in einer Parallelschaltung angeordnet.

Elektrolyseure werden heute größtenteils mit netzgeführten Stromrichtern, insbesondere mit Thyristorstromrichtern oder Diodenstromrichtern, gespeist. Diese weisen eine hohe Energiedichte auf und können damit hohe Leistungen für den Prozess der Elektrolyse bereitstellen. Es hat sich jedoch gezeigt, dass aufgrund der geringen Belastung mit Oberschwingungen der Elektrolyseur weitaus effizienter betrieben werden kann. Für die gleiche Ausbeute bei der chemischen Reaktion im Elektrolyseur wird deutlich weniger elektrische Leistung benötigt, so dass auf die hohe Leistungsdichte von netzgeführten Stromrichtern verzichtet werden kann. Auch mit einer geringeren Gesamtleistung von mindestens zwei selbstgeführten Stromrichtern, d.h. Pulsstromrichtern, ist eine gleiche Stoffmenge durch Elektrolyse erzeugbar.

Insbesondere für die Herstellung von Wasserstoff mittels Elektrolyse ist dieser Effekt deutlich zu beobachten. Auch mit geringerer elektrischer Leistung bei geringerem Oberschwingungsanteil in der Gleichspannung ist die gleiche, wenn nicht sogar eine größere Menge an Wasserstoff durch den Elektrolyseur erzeugbar. Dies ist insbesondere dann gegeben, wenn durch die versetzte Taktung Oberschwingungen unterhalb von 50 kHz beseitigt werden. Auch bei einer Beseitigung von Oberschwingungen in einem Frequenzbereich bis zu 10 kHz ist eine deutlich verbesserte und effizientere Produktion von Wasserstoff gemessen an der benötigten elektrischen Leistung nachweisbar. Mit anderen Worten wird bei geringerem Oberschwingungsgehalt, insbesondere bei Oberschwingungen unterhalb 10 kHz bzw. 50 kHz deutlich weniger elektrische Leistung für die Elektrolyse benötigt.

Bisher werden zur Wasserstoffproduktion vorwiegend netzgeführte Stromrichter mit Gleichstromzwischenkreis eingesetzt. Es wird vorgeschlagen, zum einen selbstgeführte Pulsstromrichter mit Gleichspannungszwischenkreis zu verwenden. Weiter wird vorgeschlagen, diesen Gesamtstromrichter, ausgebildet als Pulsstromrichter, in mehrere Stromrichter aufzuteilen, die gleichspannungsseitig in einer Parallelschaltung angeordnet sind und die Schaltelemente der einzelnen Stromrichter phasenversetzt zu betreiben, um den Betrieb und die Dimensionierung dafür zu optimieren.

Bei einer vorteilhaften Ausgestaltung der Erfindung weist die Drossel mindestens zwei Wicklungen und mindestens drei Anschlüsse auf, wobei eine erste der Wicklungen zwischen einem ersten Anschluss der mindestens drei Anschlüsse und einem zweiten Anschluss der mindestens drei Anschlüsse angeordnet ist, wobei eine zweite der Wicklungen zwischen dem ersten Anschluss der mindestens drei Anschlüsse und einem dritten Anschluss der mindestens drei Anschlüsse angeordnet ist, wobei der erste Anschluss mit einem der Netzanschlüsse elektrisch verbunden ist, wobei der zweiter Anschluss mit einer Phase eines ersten Stromrichters der mindestens zwei Stromrichter elektrisch verbunden ist, wobei der dritter Anschluss mit einer Phase eines zweiten Stromrichters der mindestens zwei Stromrichter elektrisch verbunden ist, wobei die Wicklungen derart magnetisch gekoppelt sind, dass Magnetfelder hervorgerufen durch einen Strom in einer Richtung vom ersten Anschluss zum zweiten Anschluss der Drossel und durch einen Strom in Richtung vom ersten Anschluss zum dritten Anschluss sich zumindest teilweise kompensieren. Mit diesen gekoppelten Wicklungen kann eine besonders einfache und kostengünstige Entkopplung der beiden Stromrichter erreicht werden. Die magnetische Kopplung der beiden Wicklungen kann beispielsweise dadurch erreicht werden, dass diese auf einem gleichen Kern angeordnet sind, der das Magnetfeld innerhalb der Drossel führt. Dabei sind die Wicklungen so zueinander ausgerichtet, dass ein Strom zwischen den beiden Stromrichtern eine hohe Induktivität erfährt, während ein gleich großer Strom zwischen erstem Anschluss der Drossel zu den beiden Stromrichtern eine geringe Induktivität erfährt. Eine derartige Drossel wird auch als Gegentaktdrossel bezeichnet. Das hat den Vorteil, dass diese Drossel, insbesondere der magnetische Kreis der Drossel, nur für die Oberschwingungen zwischen den Stromrichtern ausgelegt werden muss. Durch die Kompensationswirkung des Stroms vom Netzanschluss zu den beiden Stromrichtern spielt dieser für die Auslegung keine oder nahezu keine Rolle. Da der Anteil der Oberschwingungen im Vergleich zu dem aus dem Energieversorgungsnetz bezogenen Strom sehr gering ist, kann die Drossel besonders klein, kompakt und kostengünstig ausgeführt werden. Zudem ist mit dieser Drossel aufgrund der hohen Induktivität eine besonders gute Entkopplung zwischen den Stromrichtern, insbesondere falls die Elektrolysevorrichtung genau zwei Stromrichter aufweist zwischen den beiden Stromrichtern, realisierbar. Zudem ist diese Entkopplung unabhängig von der elektrischen Leistung der Elektrolysevorrichtung.

Dabei wird für jede Phase jeweils eine derartige Drossel vorgesehen, die jeweils mit einem der Netzanschlüsse, einer Phase des ersten Stromrichters und einer Phase des zweiten Stromrichters verbunden ist.

Bei einer weiteren vorteilhaften Ausgestaltung der Erfindung ist zwischen den jeweiligen Netzanschlüssen und der Drossel eine weitere Drossel angeordnet. Die mit zwei gekoppelten Wicklungen ausgestatte Drossel wirkt in erster Linie auf die Oberschwingungen, die sich aufgrund der Schalthandlungen zwischen den Stromrichtern ergeben. Um darüber hinaus auch das Verhalten gegenüber dem Netzanschluss insbesondere für die Leistungsaufnahme aus dem Energieversorgungsnetz zu beeinflussen und zu optimieren, hat es sich als vorteilhaft erwiesen, dafür ein entsprechendes Bauteil als weitere Drossel zwischen der Drossel und dem Netzanschluss anzuordnen. Damit kann das Regelverhalten bezüglich der Leistungsaufnahme und das Störverhalten bezüglich der Oberschwingungen getrennt voneinander ausgelegt, dimensioniert und verbessert werden. Die dabei entstehenden Drosseln sind entsprechend klein und kostengünstig herstellbar, da diese im Wesentlichen auf die Leistung der Elektrolysevorrichtung auszulegen sind.

Bei einer weiteren vorteilhaften Ausgestaltung der Erfindung ist zwischen den Netzanschlüssen und der Drossel ein Transformator angeordnet. Mit Hilfe des Transformators ist die Elektrolysevorrichtung galvanisch vom Energieversorgungsnetz bzw. der Energiequelle getrennt. Gerade bei der Elektrolyse hat sich diese Anordnung als vorteilhaft erwiesen, da mit den Elektroden immer die Gefahr von vagabundierenden Strömen gegeben ist. Diese können dazu führen, dass sich beispielsweise über das Erdpotential ein Strompfad schließt und zu unerwünschten Strömen innerhalb der Elektrolysevorrichtung oder des Elektrolyseurs führt. Mit Hilfe des Transformators können diese Ströme wirkungsvoll vermieden werden. Darüber hinaus erlaubt der Transformator, dass dieser das Spannungsniveau der Elektrolysevorrichtung an das Spannungsniveau des Energieversorgungsnetzes oder der Spannungsquelle anpasst.

Sofern der Transformator separate Wicklung für die Verbindung mit den jeweiligen Stromrichtern vorsieht, ist auch eine galvanische Entkopplung zwischen den Stromrichtern gegeben. Dadurch können auch Ausgleichsströme, insbesondere Wechselstromanteile bei den Ausgleichsströmen, zwischen den Stromrichtern vermieden oder reduziert werden. Dies kann zu einem effizienten Betrieb der Elektrolysevorrichtung maßgeblich beitragen.

Im Folgenden wird die Erfindung anhand der in den Figuren dargestellten Ausführungsbeispiele näher beschrieben und erläutert. Es zeigen:

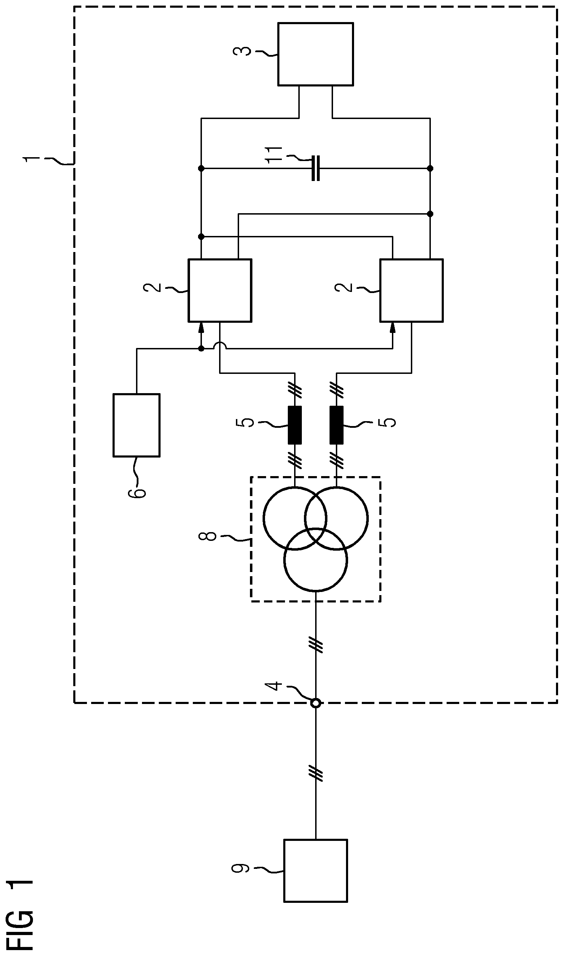

- FIG 1 bis FIG 3: Ausführungsbeispiele einer Elektrolysevorrichtung

Die FIG 1 zeigt eine Elektrolysevorrichtung 1. Diese umfasst einen Elektrolyseur 3, der von zwei gleichspannungsseitig in einer Parallelschaltung angeordneten Pulsstromrichtern 2 gespeist wird. Zur Stützung der Eingangsspannung des Elektrolyseures 3 ist im Zwischenkreis ein Kondensator 11 angeordnet. Bei den beiden Pulsstromrichtern 2 handelt es sich um selbstgeführte Stromrichter 2 mit abschaltbaren Hableitern. Gesteuert und/oder geregelt werden diese Stromrichter 2 von einer Steuervorrichtung 6, die es ermöglicht, die beiden Stromrichter 2 versetzt zu takten. Eingangsseitig, d.h. wechselspannungsseitig, sind die Stromrichter 2 dreiphasig ausgebildet. Zur Aufnahme von elektrischer Energie sind die Stromrichter 2 wechselspannungsseitig über einen Transformator 8 und Drosseln 5 mit Netzanschlüssen 4 verbunden. Aufgrund der Dreiphasigkeit sind drei Netzanschlüsse 4 vorhanden. Aus Gründen der Übersichtlichkeit ist jedoch nur einer dargestellt und die drei Phasen über entsprechende Striche an der elektrischen Verbindung angedeutet. Ebenso hat der Stromrichter 2 drei Eingänge, die auch als Phasen bezeichnet werden und in der FIG 1 nicht näher dargestellt sind. Die Netzanschlüsse 4 sind ebenfalls dreiphasig mit einer Energiequelle 9 oder einem Energieversorgungsnetz verbunden. Dabei kann die Energiequelle 9 Teil eines Energieversorgungsnetzes sein.

Mit Hilfe der Drosseln 5 ist die Leistung der Energieversorgungsvorrichtung einfacher und genauer regel- und steuerbar. Mit Hilfe des Transformators 8 kann das Spannungsniveau der Elektrolysevorrichtung 1, d.h. der darin angeordneten Stromrichter 2, an das Spannungsniveau der Energiequelle 9 angepasst werden. Darüber hinaus können durch separate Wicklungen des Transformators 8 die Stromrichter 2 wechselspannungsseitig entkoppelt werden. Darüber hinaus tragen auch die Drosseln 5 zur Entkopplung der Stromrichter 2 bei.

Alternativ kann die Elektrolysevorrichtung 1 auch mit einer einphasigen Energiequelle 9 verbunden sein. Dann sind sowohl die Stromrichter 2 als auch der Transformator 8 einphasig ausgeführt. In diesem Fall sind dann zwei Netzanschlüsse 4 vorhanden, einer für die Phase und einer für den Neutralleiter, der als Bezugspunkt dient.

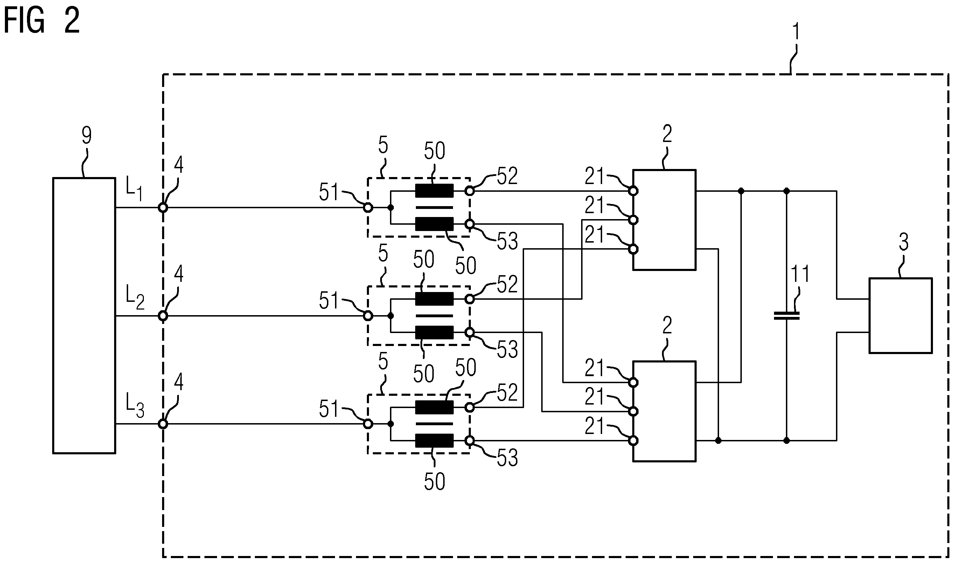

Die FIG 2 zeigt ein weiteres Ausführungsbeispiel einer Elektrolysevorrichtung 1. Zur Vermeidung von Wiederholungen wird auf die Beschreibung zur FIG 1 sowie auf die eingeführten Bezugszeichen verwiesen. Aus Gründen der Übersichtlichkeit wurde auf die Darstellung der Steuervorrichtung 6 zur Steuerung bzw. Regelung der Stromrichter 2 verzichtet.

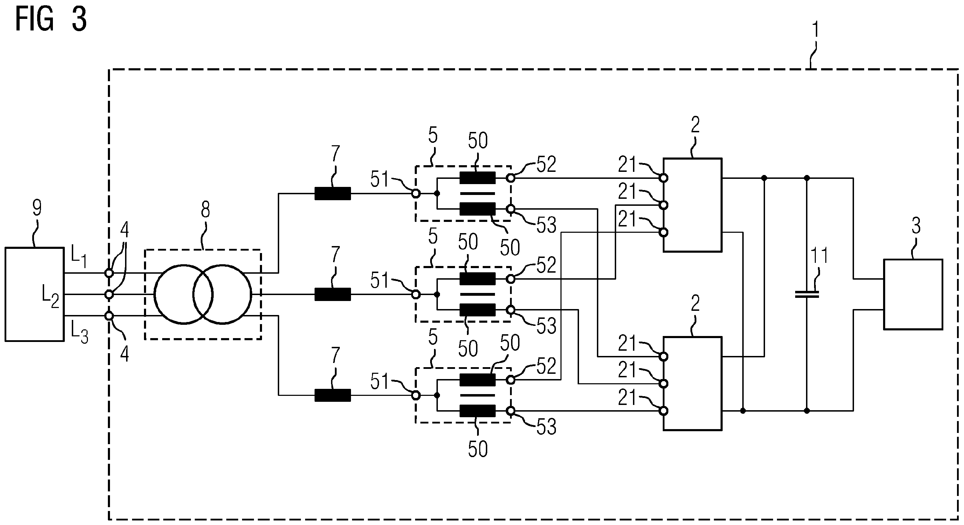

Die Drossel 5 ist bei diesem Ausführungsbeispiel mit zwei Wicklungen 50 ausgeführt, die magnetisch gekoppelt sind und eine Gegentaktdrossel bilden. Für jede Phase 21 des Stromrichters 2 weist die Elektrolysevorrichtung 1 eine derartige Drossel 5 auf. Dabei ist ein erster Anschluss 51 der Drossel 5 mit einem der Netzanschlüsse 4 verbunden, ein zweiter Anschluss 52 der Drossel 5 mit einem ersten der Stromrichter 2 verbunden und ein dritter Anschluss 53 der Drossel 5 mit einem zweiten der Stromrichter 2 verbunden. Die Kopplung der Wicklungen 50 ist dabei so ausgeführt, dass sich für einen Strom zwischen dem zweiten Anschluss 52 und dritten Anschluss 53 eine größere Induktivität ergibt als für einen Strom zwischen dem ersten Anschluss 51 und dem zweiten Anschluss 52 bzw. zwischen dem ersten Anschluss 51 und dem dritten Anschluss 53, da sich die in der Drossel 5 entstehenden Magnetfelder durch einen Strom vom ersten Anschluss 51 zum zweiten Anschluss 52 und einen Strom vom ersten Anschluss 51 zum dritten Anschluss 53 zumindest teilweise kompensieren. Eine derartige Drossel 5 wird auch als Gegentaktdrossel bezeichnet. Die Energieversorgung erfolgt, wie dargestellt, vorzugsweise dreiphasig, kann allerdings alternativ auch einphasig ausgeführt sein. Die drei Phasen der Energiequelle 9 sind mit L₁, L₂ und L₃ bezeichnet. Die Kopplung der Wicklungen 50 und die Wicklungen 50 selbst werden dabei so ausgelegt, dass sich für die Energieversorgung des Elektrolyseurs 3 und die Entkopplung der beiden Stromrichter 2 das gewünschte Verhalten ergibt. Auch in diesem Ausführungsbeispiel werden die Stromrichter 2 vorzugsweise versetzt getaktet. Durch die kompensierende Wirkung der Ströme vom ersten Anschluss 51 zum zweiten Anschluss 52 und vom ersten Anschluss 51 zum dritten Anschluss 53 muss der magnetische Kreis der Drossel 5 nur auf das Störströmverhalten der Oberschwingungen ausgelegt werden. Für das Verhalten in Bezug auf die Energieaufnahme kann, wie in FIG 3 dargestellt, eine weitere Drossel 7 in die Verbindung zwischen Netzanschluss 4 und Drossel 5 angeordnet sein, die das Verhalten der Energieaufnahme insbesondere hinsichtlich der Regelbarkeit und/oder Steuerbarkeit verbessert. Dann braucht auch nur diese weitere Drossel 7 in ihrer magnetischen Auslegung auf den Strom zur Energiequelle 9 ausgelegt zu werden. Des Weiteren kann zu einer Anpassung der Spannungsniveaus von Energieversorgungsnetz 9 und Elektrolysevorrichtung 1 wie in FIG 3 dargestellt ein Transformator 8 in der Elektrolysevorrichtung 1 zwischen den Netzanschlüssen 4 und der weiteren Drossel 7 angeordnet werden. Zur Vermeidung von Wiederholungen bei der Beschreibung des Ausführungsbeispiels der FIG 3 wird auf die Beschreibung zu den Figuren 1 und 2 sowie auf die dort eingeführten Bezugszeichen verwiesen.

Zusammenfassend betrifft die Erfindung eine Elektrolysevorrichtung 1 mit einem Stromrichter 2, einem Elektrolyseur 3 und Netzanschlüssen 4. Zur Verbesserung der Elektrolyseeigenschaften wird vorgeschlagen, dass die Elektrolysevorrichtung 1 mindestens zwei Stromrichter 2 umfasst, wobei die Stromrichter 2 gleichspannungsseitig in einer Parallelschaltung angeordnet sind, wobei der Elektrolyseur 3 mit der Gleichspannungsseite des Stromrichters 2 elektrisch verbunden ist, wobei jede Phase 21 der Stromrichter 2 über eine Drossel 5 mit einem der Netzanschlüsse 4 elektrisch verbunden ist, wobei die Elektrolysevorrichtung 1 eine Steuervorrichtung 6 aufweist, die eingerichtet ist, die Stromrichter 2 versetzt zu takten. Ferner betrifft die Erfindung ein Verfahren zum Betreiben einer derartigen Elektrolysevorrichtung 1, wobei die Stromrichter 2 versetzt getaktet werden.

## Patentansprüche

1. Elektrolysevorrichtung (1), aufweisend
- mindestens zwei Stromrichter (2),
- einen Elektrolyseur (3) und
- Netzanschlüsse (4),
wobei die Stromrichter (2) gleichspannungsseitig in einer Parallelschaltung angeordnet sind, wobei der Elektrolyseur (3) mit der Gleichspannungsseite des Stromrichters (2) elektrisch verbunden ist, wobei jede Phase (21) der Stromrichter (2) über eine Drossel (5) mit einem der Netzanschlüsse (4) elektrisch verbunden ist, wobei die Elektrolysevorrichtung (1) eine Steuervorrichtung (6) aufweist, die eingerichtet ist, die Stromrichter (2) versetzt zu takten.

2. Elektrolysevorrichtung (1) nach Anspruch 1, wobei die Drossel (5) mindestens zwei Wicklungen (50) und mindestens drei Anschlüsse (51,52,53) aufweist, wobei eine erste der Wicklungen (50) zwischen einem ersten Anschluss (51) der mindestens drei Anschlüsse (51,52,53) und einem zweiten Anschluss (52) der mindestens drei Anschlüsse (51,52,53) angeordnet ist, wobei eine zweite der Wicklungen (50) zwischen dem ersten Anschluss (51) der mindestens drei Anschlüsse (51,52,53) und einem dritten Anschluss (53) der mindestens drei Anschlüsse (51,52,53) angeordnet ist, wobei der erste Anschluss (51) mit einem der Netzanschlüsse (4) elektrisch verbunden ist, wobei der zweiter Anschluss (52) mit einer Phase (21) eines ersten Stromrichters der mindestens zwei Stromrichter (2) elektrisch verbunden ist, wobei der dritter Anschluss (53) mit einer Phase (21) eines zweiten Stromrichters der mindestens zwei Stromrichter (2) elektrisch verbunden ist, wobei die Wicklungen (50) derart magnetisch gekoppelt sind, dass Magnetfelder hervorgerufen durch einen Strom in einer Richtung vom ersten Anschluss (51) zum zweiten Anschluss (52) der Drossel (5) und durch einen Strom in Richtung vom ersten Anschluss (51) zum dritten Anschluss (53) sich zumindest teilweise kompensieren.

3. Elektrolysevorrichtung (1) nach einem der Ansprüche 1 oder 2, wobei zwischen den jeweiligen Netzanschlüssen (4) und der Drossel (5) eine weitere Drossel (7) angeordnet ist.

4. Elektrolysevorrichtung (1) nach einem der Ansprüche 1 bis 3, wobei zwischen den Netzanschlüssen (4) und Drossel (5) ein Transformator (8) angeordnet ist.

5. Verfahren zum Betreiben einer Elektrolysevorrichtung (1) nach einem der Ansprüche 1 bis 4, wobei die Stromrichter (2) versetzt getaktet werden.
